(19) Europäisches Patentamt
European Patent Office
Office européen des brevets

(11) **EP 0 928 312 B1**

(12) **EUROPEAN PATENT SPECIFICATION**

(45) Date of publication and mention
of the grant of the patent:
**09.06.2004 Bulletin 2004/24**

(51) Int Cl.⁷: **C08J 9/28**, C08J 9/30,
C08F 14/02, C09K 3/30,
C08J 9/14

(21) Application number: **97940557.8**

(22) Date of filing: **29.08.1997**

(86) International application number:
**PCT/US1997/014173**

(87) International publication number:
**WO 1998/012248 (26.03.1998 Gazette 1998/12)**

(54) **STABLE, FOAMED CAULK AND SEALANT COMPOUNDS AND METHODS OF USE THEREOF**

STABILES GESCHÄUMTES MATERIAL FÜR DIE DICHTUNG UND DIE ABDICHTUNG UND VERFAHREN ZU DESSEN ANWENDUNG

COMPOSES MOUSSEUX STABLES POUR LE CALFEUTRAGE ET L'ETANCHEITE, ET LEURS PROCEDES D'UTILISATION

(84) Designated Contracting States:
**AT BE CH DE DK ES FI FR GB GR IE IT LI LU MC NL PT SE**

(30) Priority: **19.09.1996 US 49944 P**
**16.01.1997 US 35708 P**
**29.05.1997 US 47896 P**

(43) Date of publication of application:
**14.07.1999 Bulletin 1999/28**

(73) Proprietor: **Dap Products Inc.**
**Baltimore, MD 21224 (US)**

(72) Inventors:
• **LUCAS, Patrick J.,Apartment D**
**Kettering, OH 45440 (US)**
• **TAYLOR, Anthony, J.**
**Beavercreek, OH 45432 (US)**

(74) Representative:
**Bankes, Stephen Charles Digby et al**
**BARON & WARREN**
**19 South End**
**Kensington**
**London W8 5BU (GB)**

(56) References cited:
**US-A- 4 036 673**      **US-A- 4 960 802**
**US-A- 5 084 503**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention pertains to foamable compositions that, upon foamed release thereof from an aerosol canister or the like, present a stable foamed product capable of use as a caulk, sealant, or insulating compound.

Caulking, insulation and sealant compositions are used to seal joints and other voids and to reinforce framing, tiles, panels, lathing, wall board and other structural assemblies. Foamed application of such compositions from pressurized containers and the like is highly desirable due primarily to overall ease of application. Easy clean up concerns require that such foamed products should be washed off with simple water and soap solutions.

Some of the available foamed compositions are not stable and shrink excessively after foamed application to the desired structure. Quite obviously, these products therefore fail in providing overall sealing or insulating efficacy. Moreover, other foamed products tend to sag or drip after application, again leading to failure.

It is accordingly an object to provide a foamable caulk, insulating or sealant composition that does not substantially shrink after application. It is another object to provide a foamable composition that, after foaming, may be easily cleaned with water and soap.

## Summary of the Invention

These and other objects are met by the foamable compositions of the instant invention. Compositions in accordance with the invention may be used, for example, to provide latex foam caulk and patching compounds, latex foam stucco including inside and outside wall treatment, ceiling and roof coatings and latex foam adhesives. The compositions may be disposed in pressurized aerosol containers for foamed caulk bead application or they may be contained within large pressurized bulkpacks having flexible hose or gun connectors associated therewith so that building contractors and the like may be readily supplied with larger quantities of the compositions.

Unlike polyurethane foam sealants, compositions in accordance with the invention may be simply washed with water. Current polyurethanes do not wash off but only wear off in time. Also, in contrast to polyurethane based products, the compositions will be more stable due to the urethane's propensity toward uncontrollable expansion. Additionally, foams in accordance with the invention are more "toolable" and provide smoother surfaces upon application than the urethanes.

The compositions in accordance with the invention comprise an aqueous latex emulsion of a film forming polymer. The latex emulsion is water dispersible and can accordingly be washed off the user's hands by soap and water.

The compositions in accordance with the invention further comprise a solid, lipophilic non-ionic surfactant having an HLB value of about 3 to about 8, more preferably about 3.5 to about 6. These surfactants are water insoluble and are chosen from the group of fatty acid (i.e., $C_{12}$ and greater) esters, fatty alcohol ethers and fatty acid amides. Most preferably, the surfactant comprises one or more ethoxylated fatty alcohols.

A host of liquifiable gaseous propellant components can be employed. However, it is preferred to use a combination of dimethyl ether (DME) and a volatile liquid hydrocarbon wherein the liquid hydrocarbon is present, by volume, in an amount greater than the DME.

Conventional fillers may also be added to the composition to provide anti-sagging or desired pigmentation.

The invention will be further described in conjunction with the appended drawings and detailed description.

## Brief Description of the Drawings

Fig. 1 is a schematic view showing use of the foamable compositions of the invention as a caulk to fill the gaps existing between adjacent wall board panels of a building;
Fig. 2 is a schematic view showing use of the compositions to insulate building structures;
Fig. 3 is a schematic view highlighting use of the compositions of the invention in wall patching methods;
Fig. 4 is a schematic view showing an artificial terrain composed of the instant foamable compositions, shown here as a mount for a floral display; and
Fig. 5 is a schematic view of a model train set-up, having an artificial terrain background composed of the foamable compositions of the invention.

## Detailed Description of the Invention

The compositions of the invention are contained, before foaming, in an aerosol or larger bulk quantity container that, after loading with the composition, is charged to sufficient pressure to expel a foamed bead or rope-like strand of material from the housing. Such containers are well known in the art and need not be explained herein. Suffice it here to state that such containers are operatively associated with sufficient value means so as to selectively open the container thereby allowing expulsion of the pressurized components housed therein and to close the container after the desired foamed application. One aerosol container that may be adapted for use in providing a foamed caulk-like product in accordance with the invention is shown in U.S. Patent 3,705.669 (Cox).

The compositions of the invention comprise a film forming polymer present in emulsion form. The film forming polymer may be defined as being dispersible by water when in emulsion form and, the polymer itself is either dispersible in or soluble in the liquid propellant as shall be further specified herein. By film forming we mean that the polymer, after evaporation of the propellant, should remain in the form of a cohesive foam. Generally, thermoplastic polymers as a class are acceptable as film forming polymers. Polymers derived from ethylenically unsaturated compounds such as styrene and/or acrylic acid and its lower alkyl esters may be mentioned as exemplary along with other vinyl compounds such as vinyl acetate, vinyl butyrate etc. An exemplary listing of suitable film forming polymers can be seen in U.S. Patent 4,381,066.

Preferred are latex emulsions comprising acrylic acid, lower alkyl acrylates, styrene, vinyl acetate and/or ethylene based polymers. One preferred combination is a combination of a styrene/acrylic copolymer with a vinylacetate/ethylene copolymer. The glass transition temperatures of the polymeric constituents can vary over a wide range of about -40 to about 110°C depending on the degree of hardness ultimately desired for the foam.

The propellant constituents can be chosen from a wide variety of known propellants such as the $C_1$-$C_6$ alkanes and $C_1$-$C_6$ alkenes. In this regard, volatile liquid hydrocarbons such as propane, n-butane, isobutane, hexane, n-pentane, 2-methylbutane, 1-pentene, butene, 2-methyl-2-butene, cyclobutane, cyclopentane, and cyclohexane can be employed. Less desirably, hologenated hydrocarbons such as vinyl chloride, methyl chloride, methylbromide, dichlorodifluoromethane 1, 1, 1, 2-tetra fluoro ethane and 1, 1-difluoroethane etc. may be employed although some of these are not favored due to environment concerns. A detailed listing of liquid propellants may be seen in U.S. Patent 4,381,066 (Page).

In addition to the volatile liquid hydrocarbon component described above, the propellant preferably comprises dimethyl ether (DME). The amount of the DME in the propellant composition is controlled so that the volatile liquid hydrocarbon is present in a volumetrically greater amount than the DME. For example the volatile liquid hydrocarbon should be present in an amount (by volume) of 1-5:1, preferably 2:1 volatile liquid hydrocarbon: DME.

It has been found that use of DME in the propellant enhances quick drying of the resulting foams. The propellant is added to the foamable composition in an amount of 2-10 wt% based on the total composition weight. Preferably, the propellant is present in an amount of between about 4-6 wt%.

The choice of surfactant to be employed is an important one. The surfactant should be a non-ionic solid, waxy lipophilic compound having an HLB value of about 3-about 8, preferably about 3.5-about 6. These surfactants are water insoluble and are chosen from fatty (i.e., $C_{12}$ or greater) acid esters, fatty alcohol ethers and fatty acid amides.

As to the fatty alcohol ethers, these include alkoxylated (preferably Et-O-) fatty alcohols.

Preliminary results have indicated that the following surfactant types are effective:

ethoxylated fatty alcohols
fatty acid amides
fatty acid esters

In addition to the above components, the foamable compositions may also comprise a dispersant/solvent such as isopropanol to aid in dispersing the surfactant. Isopropanol also aids in foam drying and acts as a heat sink when the solid surfactant is melted and mixed during preparation of the foamable formulation.

Other components including fillers such as silica, asbestos, chalk, titanium dioxide, zinc oxide, siloxanes, sundry other pigments and calcium carbonate etc. can optionally be added. Ethylene glycol and other freeze-thaw agents can be included in the formulation. Flame retardant compounds can also be noted as possibly being added. These include antimony oxides, brominated and chlorinated paraffins, A1 $(OH)_3$ and aromatic flame retardants. All of these compounds are referred to herein broadly as "fillers."

In addition, water repellent compounds can be included in the formulation as needed. In this regard a host of such compounds are commercially available and could be used. Exemplary water repellent compounds include the siloxanes, waxes and cationic water repellents. Preliminary data suggests that the cationic water repellents provide enhanced water repelling function without causing excessive "sag" in the foamed formulation. At present, the cationic amines such as the quaternary ammonium salts are preferred. One such product is available under the trademark Mackernium SDC-85 from McIntyre Group Ltd.. University Park, Illinois. This product is a stearalkonium chloride available in flake form.

If ferrous metal containers are used to house the formulation, it may be desirable to add a minor amount of a rust inhibitor component to the formulation. These again are available from many commercial suppliers. One such exemplary rust inhibitor is available from Raybo Chemical Co., under the trademark "Raybo 60 No Rust".

Anti-microbial agents such as fungicides, algaecides, mildewicides, etc. may also be added to the formulation. One such fungicide is sold under the mark "Polyphase AF1" and is available from Troy Chemical.

Exemplary compositions include the following components:

| (a) | film forming o/w 50-98 polymer emulsion | | (wt% based upon weight of foamable composition prior to charge of propellant) |
|---|---|---|---|
| (b) | surfactants | 1 - 10 | " |
| (c) | dispersant/solvent | 1 - 10 | " |
| (d) | fillers | 0 - 40 | " |
| (e) | water repellents | 0 - 5 | " |
| (f) | rust inhibitors | 0 - 5 | " |
| (g) | anti microbial agents | 0 - 5 | " |
| (a) (b) (c) (d) (e) (f) and (g) add up to 100 wt% | | | |
| propellant        2 - 10 (wt% based upon weight of the composition including propellant) | | | |

Usually, the surfactants and water repellants are melted and mixed with the dispersant/solvent. This resulting mixture is mixed with the requisite polymer emulsion or emulsions and then the desired filler compounds, as described above, are added. The propellant charge is then added in an amount of about 2-10 wt% which brings pressure within the container up to around 10 psig at room temperature.

Examples

A variety of different surfactant types were screened to see which ones could possibly be employed to provide a stable foam caulking and sealant composition. The following screening tests were employed.

Preparation of Screening Formulations

The requisite surfactants were added to and mixed with isopropanol. In those cases in which the surfactants were present in solid form, they were melted prior to mixing. After the resulting mixture was stirred, the requisite polymer latex(s) were then added. About 340 grams of the resulting emulsion were then charged into an aerosol container along with a liquid propellant mixture comprising "A-70" liquid hydrocarbon propellant (i.e., propane, n-butane and isobutane) and dimethylether (DME). The total charge of propellant was about 4-6 wt% based on the combined weight of the emulsion and propellant. The "A-70" was present in an amount of 2:1 by volume "A-70":DME.

Expansion Tests

The screening formulations were then sprayed from the canister in the form of foam-like beads. The initial height of each bead was measured and then the height was measured again after 18-24 hours. Expansion (or contraction) was measured in accordance with formula

$$\frac{\text{head height after 18-24 hours}}{\text{initial bead height}}^2 = \text{volumetric increase}$$

Volumetric increases of the order of about .45 and greater were deemed acceptable to pass the screening tests. Most desirable are expansions of about .6 to 1.0 and greater with expansion values of about 1 and greater clearly preferred.

Softness Test

40 hours after form beads of the formulations had been produced, a penetrometer was used to measure the depth of needle penetration into each of the test samples. Penetration of less than about 10 mm was deemed acceptable as exhibiting the necessary hardening characteristics desirable for a caulk or insulation material.

H$_2$O Absorption

A one inch foam barrier was extruded on top of a one and one-half inch cotton barrier sample in an eight ounce cup. The foam was allowed to dry for about 40 hrs. The cups were immersed in a flow (80 ml/min +/-10) of tap water for about one minute. The increase in weight of the foam/cup sample was measured.

Screening Formulations Tested

Unless otherwise noted. tested formulations were as follows:

| (1) | surfactant | ≈2 wt% |
|-----|------------|--------|
| (2) | IPA | ≈1.5 wt% |
| (3) | film forming polymer | ≈60 wt% |
| (4) | water | ≈remainder |

Example 1 - The following compositions shown in Table 1 were deemed to pass the screening tests due primarily to their ability to form stable foam beads as especially seen by satisfactory performance of about .45 and greater in the expansion tests. By use of the term "stable" we mean that the foams do not substantially collapse upon drying. The fact that candidates pass this initial screening does not mean absolutely that these formulations would provide an commercially viable product. After initial product screening, additional tests were undertaken, leading to the determination of the preferred embodiment noted infra.

Candidates Passing The Screening Tests

TABLE 1

| SURFACTANT | | | | | | |
|---|---|---|---|---|---|---|
| **Brand Name** | **Chemical Family** | **Chemical Description** | **HLB** | **Expansion** | **Softness** | **$H_2O$ Regain** |
| 1. Hetoxol CA- 2(a) | Ethoxylated alcohol | ethoxylated (2) cetyl alcohol | 5.1 | 1.32 | 4.3 | 0.03 |
| 2. Brij 52 (b) | Ethoxylated $C_{16}$ ether | POE(2) hexadecylether | 5.3 | 0.95 | X | X |
| 3. Paramul (c) SAS | Fatty amido-ester | stearamide DIBA stearate | * | 0.92 | X | X |
| 4. Pegosperse(d)100 S | PEG fatty ester | Mixture of stearic acid = 45% diethyleneglycol monostearate = 35% diethyleneglycol distearate = 10% diethylene glycol = 5% potassium stearate = 5% | 3.8 | 0.89 | 5.5 | 0.28 |
| 5. Brij 52 (3) and Brij 72 | Ethoxylated ethers | POE(2) $C_{16}$ & $C_{18}$ ethers in a 1:1 ratio | =5 | 0.66 | X | X |
| 6. Brij 72 (e) | Ethoxylated ethers | POE(2) $C_{18}$ ether | 4.9 | 0.49 | X | X |
| 7. Lipocol (f)    SC-4 | POE $C_{16}$ & $C_{18}$ ethers | Cetyl ether & stearyl ether POE(4) | 8 | 0.46 | X | X |

a = available from Heterene Inc.

b = available from ICI Surfactants

c = available from Bernel Chemical Co., Inc.

d = available from ICI Surfactants

e = available from ICI Surfactants

f = available from Lipo Chemicals Inc.

* = postulated HLB of about 5

One other surfactant combination, namely Incroquat CR, in a 5.5 wt% amount passed the screening test. This surfactant is a surfactant blend including $C_{16}$ OH and PEG (40) castor oil in combination with stearylalkonium chloride.

Candidate Failures

Formulations including the following surfactant components were deemed to fail. (Table 2)

TABLE 2

| NON-IONIC SURFACTANTS | | | | | | |
|---|---|---|---|---|---|---|
| NAME | CHEMICAL FAMILY | CHEMICAL DESCRIPTION | HLB | EXPANSION | SOFTNESS | H2O abs. |
| Polawax A-31 | Emulsifying wax | Emulsifying wax | X | 0.33 | 2.8 | X |
| Brij 58 | Ethoxylated alcohol | POE (20) cetyl ether | 15.7 | 0.28 | X | X |
| Amiter LGS-5 | Protein/difatty (POE) ester | POE(5)ether diester of N-lauroyl L-glutamic acid | 5.4 | 0.19 | 4.2 | X |
| Glyosperse TS-20 | POE fatty esters & oils | POE(20)sorbitan tristearate | 11 | 0.18 | X | X |
| Brij 35 | POE C12 fatty ether | POE(23) lauryl ether | 16.9 | 0.16 | X | X |
| General 122 N=5 | Ethoxylated alcohol | PEG-5 soya sterol | 7 | 0.15 | 3.8 | X |
| Annul 930 | POE alkylphenol | Nonylphenol POE glycol ether | 17.1 | 0.15 | X | X |
| Phospholipon 50 G | Lecithin derivative | Leerthin | X | 0.14 | X | X |
| Anasolve 200 | POE C16 fatty ether | POE(20) isohexadecyl ether | 15.7 | 0.14 | X | X |
| Brij 98 | POE C18 fatty ether | POE(20) oleyl ether | 15.3 | 0.13 | X | X |
| Cedapal CA-890 | POE alkyl phenol | Octoxynol-100 | 18 | 0.13 | X | X |
| Pegosperse 50 DS | Glycol Distearate | Ethylene Glycol Distearate | 2.0 | 0 | X | X |
| Pegosperse 50 MS | Glycol Stearate | Ethylene Glycol Monostearate | 3.0 | 0 | X | X |
| Span 55 | Sorbitan Ether | Sorbitan Tristearate | 2.1 | 0 | X | X |
| Super Hartolan | Lanolin Based Derivatives | Lanolin Alcohols (Mixture of Fatty OH. Steroid. Triterpenoid OH) | 4 | 0.06 | X | X |
| Amiter LGS-5(H) | Protein Based Surfactant | POE(5)Stearyl ether diester of N-Lauroyl L-Glutamic Acid | 5.4 | 0.19 | X | X |

TABLE 2   (continued)

| NON-IONIC SURFACTANTS | | | | | | |
|---|---|---|---|---|---|---|
| **NAME** | **CHEMICAL FAMILY** | **CHEMICAL DESCRIPTION** | **HLB** | **EXPANSION** | **SOFTNESS** | **H2O abs.** |
| Glucate SS | Glucose Derivative | Methyl Glucose Sesquistearate | 6 | 0 | X | X |
| Imwitor 312 | Glycerol esters | Mono & D1 C12 Glyceryl Esters some C10 & 1,2,3-propanetriol | 6 | 0 | X | X |
| Polyaldo HGDS KFFG | C16 & C18 Fatty Esters | Hexaglyceryl Disterarate | 7 | 0 | X | X |
| General 122 N-S | Ethoxylated Alcohol | PEG-5 Soya Sterol | 7 | 0.15 | X | X |
| Hetoxamate 400 DS | Glycol Esters | PEG-8 Distearate | 10.6 | 0 | X | X |
| Chernax HCO-25 | Ethoxylated Fatty Esters | Ethoxylated Hydrogenated Castor Oil | 10.8 | 0 | X | X |
| Span 60 | Sorbitan fatty acid ester | Sorbitan Monostearate | 4.7 | 0.00 | X | X |
| Span40 | Sorbitan fatty acid ester | Sorbitan monopalmitate | 6.7 | 0.02 | X | X |
| | | **CATIONIC SURFACTANTS** | | | | |
| **NAME** | **CHEMICAL FAMILY** | **CHEMICAL DESCRIPTION** | **HLB** | **EXPANSION** | **SOFTNESS** | **H2O abs.** |
| Mackernium EQ-15 | Quaternary Amine | Triethanolamine tallow diesser | X | 0.50 | 0.6 | X |
| Armeen 2C | Amine | Di(cocoalkyl) amines | X | 0.37 | X | X |
| Emkalon Base C-100 | Lanoline based derivative | POE cholesteryl & isocholesteryol fatty esters | X | 0.22 | 1.4 | X |
| Lexemul AR | Glycendes, C14-C18 | Octadecanamide, N. (2 (Diethylamino) ethyl)- | X | 0.21 | X | X |
| Armac HT flk | Amine acetates | Hydrogenated tallowalkyl amine acetates | X | 0.16 | X | X |
| | | **ANIONIC SURFACTANTS** | | | | |
| **NAME** | **CHEMICAL FAMILY** | **CHEMICAL DESCRIPTION** | **HLB** | **EXPANSION** | **SOFTNESS** | **H2O abs.** |
| Norfox Oleic-Flks | Soap | sodium oleate | 20 | 0.39 | X | X |

TABLE 2 (continued)

| NON-IONIC SURFACTANTS | | | | | | |
|---|---|---|---|---|---|---|
| | | **ANIONIC SURFACTANTS** | | | | |
| **NAME** | **CHEMICAL FAMILY** | **CHEMICAL DESCRIPTION** | **HLB** | **EXPANSION** | **SOFTNESS** | **H2O abs.** |
| Cerasynt Q | Glycerol esters | Glycerol stearate/ glycena/K -stearate | X | 0.32 | 1.3 | X |
| Lexemul T | Glycerol esters. C14-C18 | Potassium soap of fatty acids | 5.5 | 0.24 | 0.9 | X |

Discussion

In accordance with the above, success was shown when Examples 1-7 were screened. The surfactants employed in these formulations were all water insoluble, solid, crystalline, lipophilic surfactants having HLB's of about 3-8 preferably 3.5-6. Chemically, these surfactants fall within the classes of fatty acid ($C_{12}$ and greater) esters, fatty alcohol ethers and fatty amides. In some cases, surfactants falling within the general chemical classes and HLB values described in the preceding sentence failed the initial screening study. It appears that such failures may be attributable to stearic hindrance factors which prohibit proper surfactant functioning at the w/o interface in the foamable formulation. Generally speaking these stearic hindrance problems appear to arise in conjunction with surfactant conformations that include bulky substituents such as ring structures, triester functionality, the location of more than 1 glycol group between ester groups, and glycerol esters.

One exemplary formulation includes a combination of three different water insoluble solid, crystalline surfactants having HLB's of between about 2-about 8. The surfactants are:

| | | M.P. |
|---|---|---|
| Brij 52 | Polyoxyethylene(2) cetyl alcohol | 86.0-93.2°F (30-34°C) |
| Brij 72 | Polyoxyethylene(2) stearyl ether | 105.8 - 113°F (41-45°C) |
| Pegosperse 5ODS | ethylene glycol distearate | 136.4 - 147.2°F (58-64°C) |

It is thought that the staggered melting points of the surfactant blend enhance the foam bubble stability in that the lowest m.p. surfactant tends to crystalize last with the highest m.p. surfactant crystallizing first. The Pegosperse 5ODS has been added to give water resistance and hardness to the resulting foam even though when used by itself as a surfactant, it did not produce a stable foam (see Table 2 supra.).

Based on presently available data, the composition preferred for use is as follows.

| Formulation 1 | | |
|---|---|---|
| | Brij 52 | 1.0% |
| | Brij 72 | 0.7% |
| | Mackemium SDC-85 | 0.7% |
| | IPA | 4.0% |
| | Ethylene Glycol | 2.0% |
| | Polyphase AF-1 | 0.2% |
| | Raybo 60 No Rust | 1.25% |
| | Polymer | |
| a) | Styrene/acrylic copolymer: solids = 48.5%, $T_g \approx 103°C$ Lucidene 370, available Morton International | |
| | Solids present | 21.86% |
| b) | Polyvinyl acetate/ | |

(continued)

| Formulation 1 | | |
|---|---|---|
| Polymer | | |
| | ethylene copolymer; solids = 72.0%; $T_g \approx 0°C$; Airflex 720 BP, available Air Products | |
| | Solids present | 32.45% |
| water | | remainder |

Other exemplary (but not preferred) compositions include :

| Formulation 2 | | |
|---|---|---|
| | Brij 52 | 1.0% |
| | Brij 72 | 0.7% |
| | Pegosperse 5ODS | 0.7% |
| | IPA | 4.0% |
| | Ethylene Glycol | 2.0% |
| | Polymer | |
| a) | Styrene/acrylic copolymer: solids = 48.5%, $T_g \approx 103°C$ Lucidene 370, available Morton International | |
| | Solids present | 22.21% |
| b) | Polyvinyl acetate/ ethylene copolymer; solids = 72.0%; $T_g \approx 0°C$; Airflex 720 BP, available Air Products | |
| | Solids present | 32.98% |
| water | | remainder |

| Formulation 3 | | |
|---|---|---|
| Hetoxol | ethoxylated(2) cetyl alcohol | 1.8% |
| IPA | | 4.0% |
| Ethylene Glycol | | 2.0 |
| Styrene/acrylic copolymer | | 22.36 |
| Polyvinlacetate/ethylene copolymer | | 33.19 |
| water | | remainder |

To these emulsions, a propellant as described above (preferably 2:1, volume A-70: DME) is added in an amount of 4.95% based on the weight of all components (including propellant) present.

Although applicant is not to be bound to any particular theory of operation, it is thought that the solid lipophilic surfactant coats the volatile liquid hydrocarbon propellant component as the formulation is expelled from the pressurized can. The surfactant, upon foam dispensing, changes from the liquid phase into the solid phase where it is positioned along the water/organic interface. At that location, the surfactant functions as a foam builder, supporting the bubbles formed by the volatile liquid hydrocarbon and surrounding polymer emulsion. Upon evaporation of the propellant and water from the emulsion, the polymer bubbles are stabilized by the waxy surfactant and polymer solids.

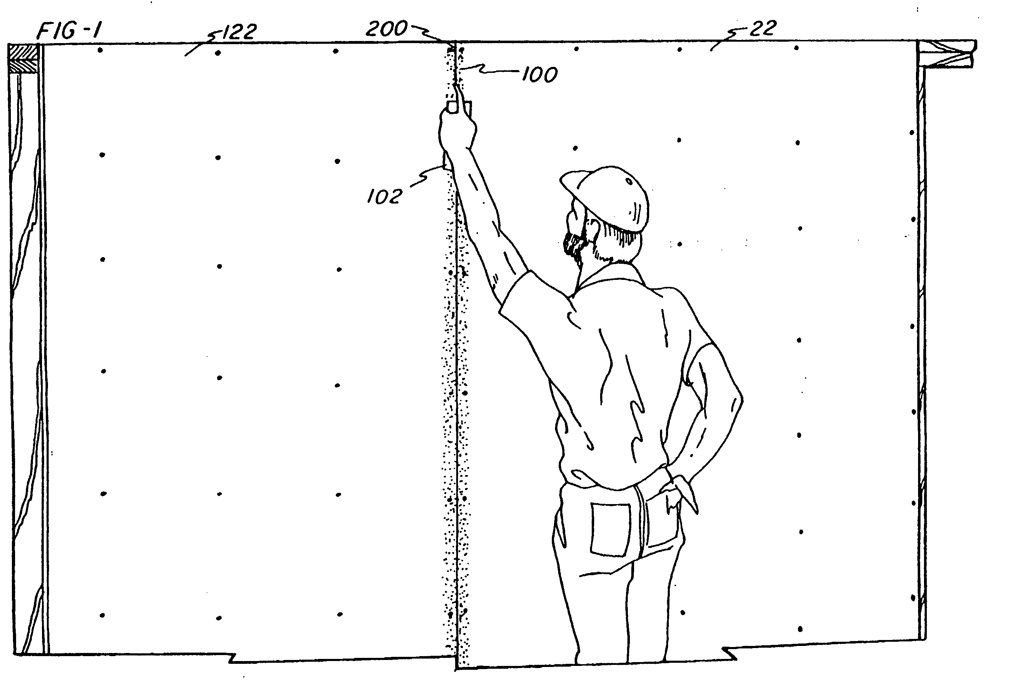

The foamable compositions in accordance with the invention can be utilized to fill joints, cracks, crevices, gaps, or other spaces in or between building or structural units. For example, in Fig. 1, the foamed composition 100 is applied to seal cracks 20 that exist between adjacent wall board members 22 of the building structure. The foamable composition 100 is supplied to the crack from a pressurized spray canister 102.

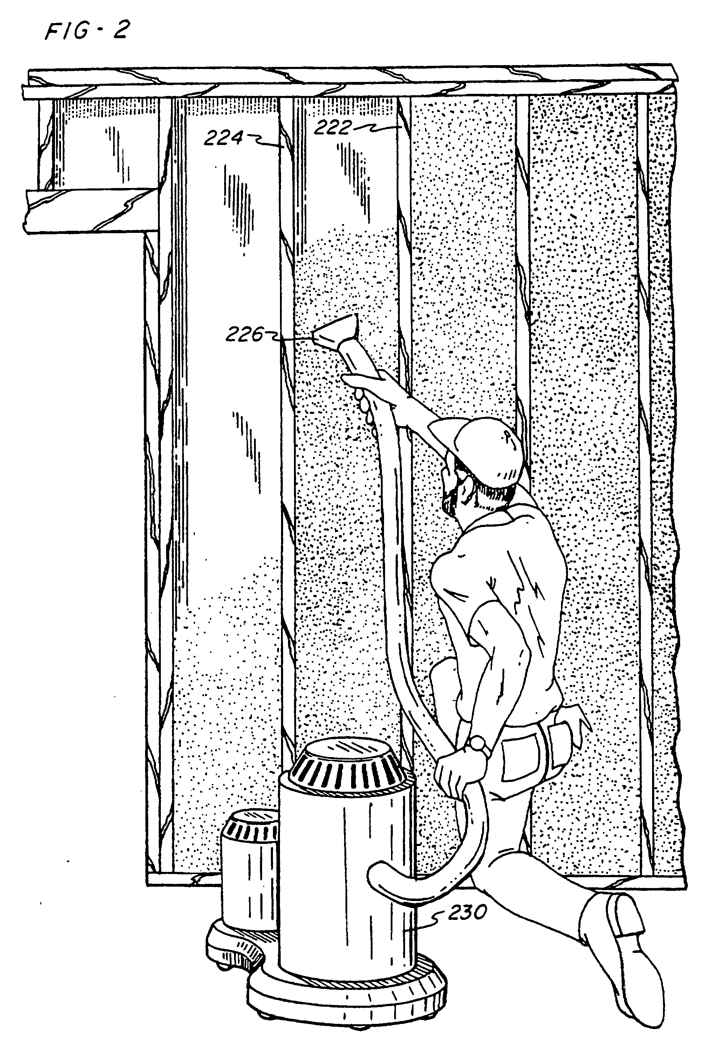

Similarly, the foamable compositions can be utilized to provide insulation in the construction industry. With regard to Fig. 2, the composition is applied in foamable form between wall stud members 222, 224. Here, the foamable composition is supplied through a wide-mouth nozzle means 226 from an enlarged pressurized canister 230 that may be conveniently strapped onto the back of the worker. In such manner. foams in accordance with the invention can be applied to provide thermal insulating sound dampening or moisture barrier like properties.

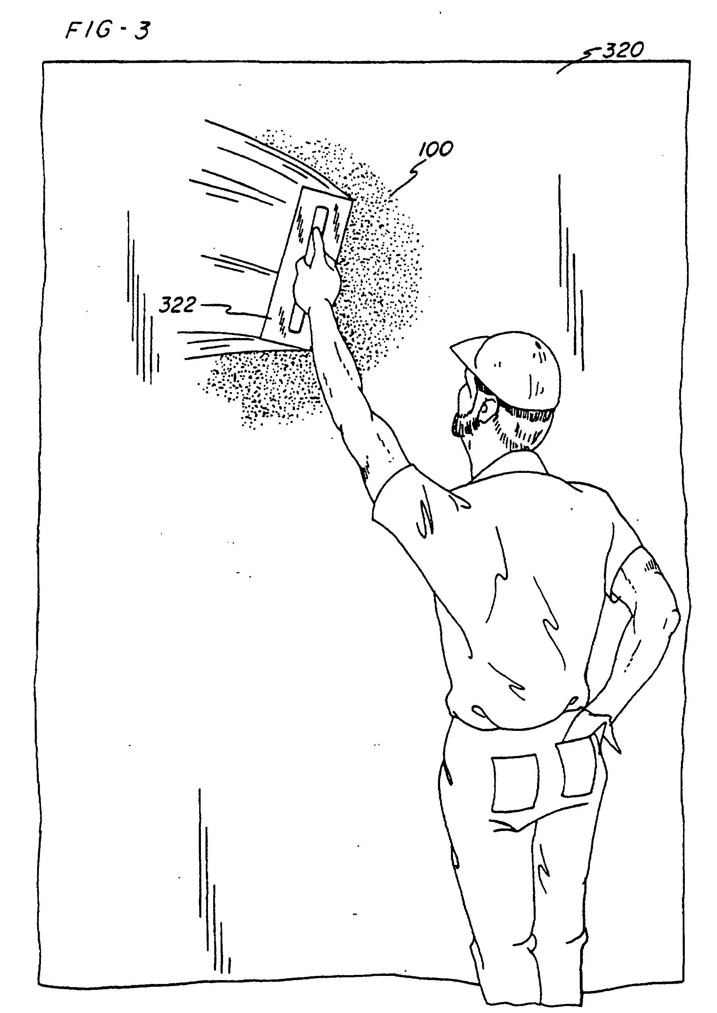

The compositions in accordance with the invention may be applied with appropriate tools or the like to the requisite substrate. As shown in Fig. 3, the foamable composition 100 of the invention is utilized as a patching material to fill concavities, or holes in the wall surface 320. The user simply applies a mass or mound of the composition 100 into the desired concavity and works the composition with a trough 322. After the foamable composition sets up, a smooth surface is provided.

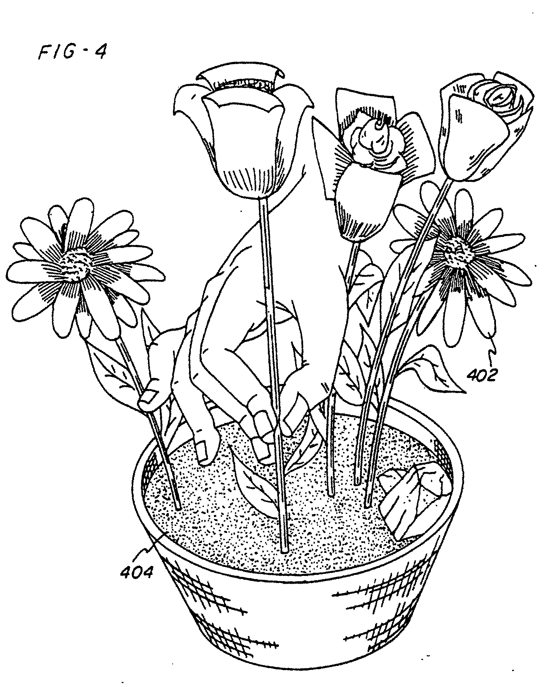

As shown in Fig. 4, the foamable composition may also be utilized to provide an artificial terrain 404, for a variety of craft and hobby purposes. Here, the foamable composition is supplied, and formed into the requisite artificial terrain 404 which provides as an anchor site or means for supporting a plurality of flowers 402. Although the artificial terrain 404 is shown here in conjunction with and as providing a support for flowers 402, the foamable compositions can be used to supply similar terrains or background materials for a host of other craft or hobby items.

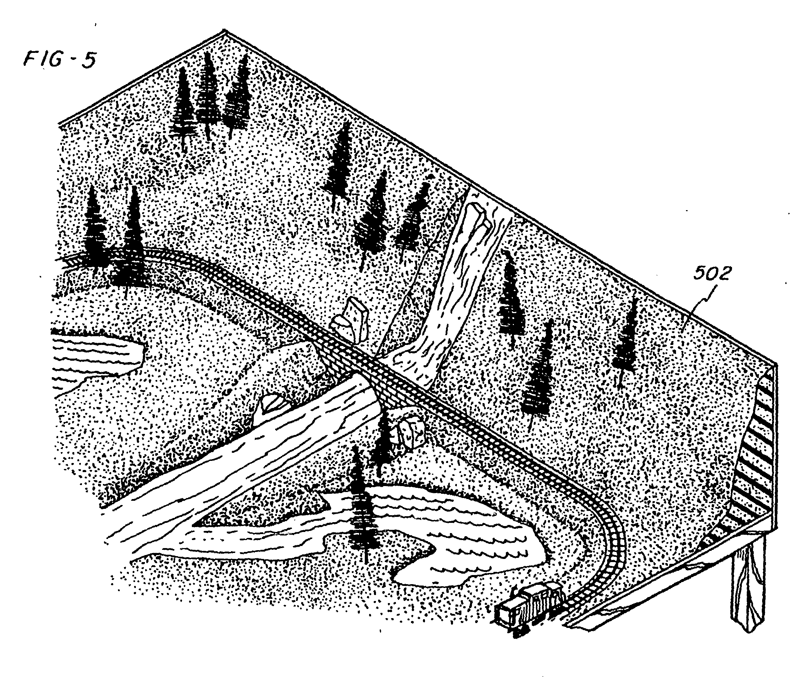

In Fig. 5, the scenic background 502 formed of the foamable compositions of the invention, is utilized to provide a planned, artificial topography for a model railroad set.

The latex polymer foam compositions of the invention have a natural home in the craft market due to the convenience and safety of a water based foam. The toy market for this foam technology is attractive for the same reasons. This latex polymer foam technology has application in automotive and industrial equipment manufacturing as an insulating sealant or adhesive. Other industrial applications may include the use of open-celled foams for sewage treatment, filtration devices, anion/cation exchange resins, and microbiological growth medias. Medical applications could include the investigation of open-celled foams for tissue grafting or biomedical implants and stabilization of biological macromolecules such as proteins, cellulosics. and polysaccharides into foam products.

The foams in accordance with the invention may be used as an encapsulating or coating medium for application over toxic and/or other hazardous materials. For example, asbestos bearing structural units such as walls, roofs and flooring may simply be coated with the foam compositions. After drying, the thus covered structural units would exhibit reduced airborne contaminant expulsion. Possibly the foams could even be used to encapsulate radioactive materials.

As previously noted. latex foam compositions of the invention may be used as a foam insulating sealant, ceiling texture, non-shrink caulk, textured patching compound, stucco repair product, white glue. construction adhesive, spackling and hand cleanser.

There are a myriad of other potential uses for these compositions. The following are mentioned as possibilities:

1) crack filling applications
2) component in wallboard tape/mud replacement products
3) component in driveway crack sealer
4) component in foam-in-place bug repellant
5) component in smoke/fire containment product
6) pipe insulation sealant
7) painter's caulk
8) component in foam-in-place gasket material
9) component in sound absorber
10) component in adhesive grout
11) component in alignment aid - temporary tack-in-place
12) component in foam-in-place leveler/gap filler/adhesive
13) component in replacement for white glues
14) component in bulk caulk delivery system
15) component in moisture barrier

Many of these compositions lend themselves to bulk application techniques well suited for the manufactured housing market. Others like the patching and repair products are better suited to the convenient "no gun needed" aerosol can.

Unlike competitive polyurethane foams the instant foamable compositions contain no isocyanates which are skin and respiratory sensitizers. (Once sensitized, exposure to isocynates can cause respiratory failure.) The instant compositions will not permanently bond to the skin and can be easily removed by water cleanup. Polyurethane requires a hazardous flammable solvent for its removal. The compositions of the invention are easy to control during application. They are toolable and moldable, and they are reusable eliminating the waste and mess of polyurethane foam. Moreover, the foam compositions are paintable with all paints. Oil based paints (including virtually all spray paint) will dissolve polyurethane foam. The instant foam compositions do not require painting for exterior applications because they are UV stable. They remain white and will not discolor or degrade like polyurethane foam. The compositions exhibit no hydraulic effect to cause buckling or structural failure.

**Claims**

1. A foamable composition comprising:

    (a) an aqueous emulsion comprising a film forming polymer;
    (b) a liquid propellant; and
    (c) a solid, lipophilic non-ionic surfactant having an HLB value of 3-8, said composition exhibiting a volumetric expansion 18-24 hours after dispensing it of 0.45 or greater.

2. A composition as recited in claim 1 wherein said film forming polymer comprises an emulsion including polyvinylacetate/ethylene copolymer and styrene/acrylic copolymer.

3. A composition as recited in claim 1 or claim 2 wherein said propellant comprises a liquefied gas component including a lower ($C_1$-$C_6$) alkane or ($C_1$-$C_6$) lower alkene.

4. A composition as recited in claim 3 wherein said lower ($C_1$-$C_6$) alkane is present and comprises propane, isobutane, and n-butane.

5. A composition as recited in claim 3 or claim 4 wherein said propellant further comprises DME, and wherein said lower ($C_1$-$C_6$) alkane is present said DME being present in a ratio by volume of DME:lower ($C_1$-$C_6$) alkane of from 1:1 to 1:5.

6. A composition as recited in claim 5 wherein said DME is present in a ratio by volume of DME:lower ($C_1$-$C_6$) alkane of about 1:2.

7. A composition as recited in any preceding claim which is a caulk or insulating composition.

8. A foamable caulk or insulating composition for storage under pressure inside a dispenser adapted for release of a foamed bead or strand of said caulk or insulating composition, said composition comprising:

    (a) an aqueous emulsion comprising a film forming polymer;
    (b) a liquid propellant; and
    (c) a solid, water insoluble lipophilic surfactant having an HLB value of 3-8;

    wherein said water insoluble lipophilic surfactant is present in an amount of 1-10 wt.% based upon the total weight of (a) and (c), said composition, after foamed release from said dispenser, exhibiting a percentage volumetric expansion 18-24 hours after said release of 0.6 or greater.

9. A composition as recited in claim 8 wherein after said release, said composition exhibits an expansion of 1.0 or greater.

10. A composition as recited in any preceding claim wherein said film forming polymer comprises styrene/acrylic copolymer and polyvinyl acetate/ethylene copolymer in a weight ratio of 0.5:1 to 0.6:1 styrene/acrylic copolymer: polyvinyl acetate/ethylene copolymer.

11. A composition as recited in any preceding claim wherein said propellant is present in an amount of 2-10 wt.% based on the total weight of (a) (b) and (c).

**12.** A composition as recited in claim 11 wherein said propellant is present in an amount of 4-6 wt.%.

**13.** A composition as recited in any preceding claim wherein said surfactant comprises a component selected from fatty alcohol ethers, fatty acid esters and fatty acid amides.

**14.** A composition as recited in claim 13 wherein said surfactant has an HLB of 3.5 to 6.

**15.** A composition as recited in claim 14 wherein said fatty alcohol ether comprises an alkoxylated fatty alcohol.

**16.** A composition as recited in claim 15 wherein said alkoxylated fatty alcohol comprises ethoxylated (2) cetyl alcohol or ethoxylated (2) stearyl ether.

**17.** A composition as recited in claim 14 wherein said fatty acid amide comprises an amide of stearic acid.

**18.** A composition as recited in claim 14 wherein said fatty acid ester comprises an ethylene glycol ester of stearic acid.

**19.** A composition as recited in any preceding claim further comprising isopropanol (d) in an amount of 1-10 wt.% based upon the combined weight of (a)/(c) and (d).

**20.** A composition as recited in claim 19 wherein said aqueous emulsion comprising said film forming polymer is present in an amount of about 50-98% based on the total weight of (a), (b), (c) and (d).

**21.** A foamable composition comprising:

    (a) an aqueous emulsion comprising a film forming polymer;
    (b) a liquid propellant; and
    (c) a surfactant selected from

        (i) ethoxylated fatty alcohol ethers,
        (ii) fatty acid esters, and mixtures thereof, said (i) and (ii) being solid, water insoluble lipophilic surfactants having an HLB value of between 3 to 8;

wherein said surfactant (c) is present in an amount of 1-10 wt.% based upon the total weight of (a) and (c).

**22.** A composition as recited in claim 21 wherein said surfactant comprises a mixture of (i) and (ii), wherein (i) is an ethoxylated fatty alcohol, and (ii) is an ethylene glycol ester of said fatty acid.

**23.** A composition as recited in claim 22 wherein said ethoxylated fatty alcohol comprises a blend of ethoxylated cetyl alcohol and ethoxylated stearyl alcohol and wherein said ethylene glycol ester of said fatty acid comprises ethylene glycol distearate; said surfactant being present in said composition in an amount of 1-10 wt.% based upon the weight of said emulsion and said surfactant.

**24.** A composition as recited in claim 23 wherein said ethoxylated cetyl alcohol is present in an amount of about 1.0%, said ethoxylated stearyl alcohol is present in an amount of about 0.7%, and said ethylene glycol distearate is present in an amount of about 0.7%.

**25.** A pressurized aerosol container having a valve associated therewith for dispensing its contents in the form of a stable foam and containing a foamable composition as recited in any preceding claim.

**26.** A dispenser having stored therein under pressure a foamable caulk or insulating composition as recited in any one of claims 1 to 24, said dispenser being adapted for release of a foamed bead or strand of said composition.

**27.** A method of filling joints, cracks or spaces existing between adjacent structural units comprising applying to said joint, crack or space a sufficient filling amount of a foamable composition as recited in any one of claims 1 to 24.

**28.** A method of forming an artificial terrain useful as a structural support or background for a hobby or craft article comprising providing a mass of foamable composition as recited in any one of claims 1 to 24.

**29.** A method of providing an insulating layer between structural units comprising applying a layer of a foamable composition as recited in any one of claims 1 to 24, adjacent one of said structural units.

**Patentansprüche**

**1.** Schäumbare Zusammensetzung, die Folgendes umfasst:

(a) eine wässrige Emulsion mit einem filmbildenden Polymer;

(b) ein flüssiges Treibmittel; und

(c) einen festen, lipophilen nichtionischen grenzflächenaktiven Stoff mit einem HLB-Wert von 3-8, wobei die Zusammensetzung 18-24 Stunden nach ihrer Abgabe eine Volumenausdehnung von 0,45 oder mehr zeigt.

**2.** Zusammensetzung nach Anspruch 1, bei der das filmbildende Polymer eine Emulsion umfasst, die ein Polyvinylacetat/Ethylen-Copolymer und ein Styrol/Acryl-Copolymer enthält.

**3.** Zusammensetzung nach Anspruch 1 oder Anspruch 2, bei der das Treibmittel eine Flüssiggaskomponente umfasst, die ein niederes Alkan ($C_1$-$C_6$) oder ein niederes Alken ($C_1$-$C_6$) enthält.

**4.** Zusammensetzung nach Anspruch 3, bei der das niedere Alkan ($C_1$-$C_6$) vorhanden ist und Propan, Isobutan und n-Butan umfasst.

**5.** Zusammensetzung nach Anspruch 3 oder Anspruch 4, bei der das Treibmittel ferner DME umfasst, und bei der das niedere Alkan ($C_1$-$C_6$) vorhanden ist und das DME in einem Volumenverhältnis von DME zu niederem Alkan ($C_1$-$C_6$) von 1:1 bis 1:5 vorhanden ist.

**6.** Zusammensetzung nach Anspruch 5, bei der das DME in einem volumenverhältnis von DME zu niederem Alkan ($C_1$-$C_6$) von etwa 1:2 vorhanden ist.

**7.** Zusammensetzung nach einem der vorhergehenden Ansprüche, bei der es sich um eine Dichtungs- oder Isolierzusammensetzung handelt.

**8.** Schäumbare Dichtungs- oder Isolierzusammensetzung zur Aufbewahrung unter Druck in einem Spender, der dazu geeignet ist, einen geschäumten Tupfen oder Strang der Dichtungs- oder Isolierzusammensetzung abzugeben, wobei die Zusammensetzung Folgendes umfasst:

(a) eine wässrige Emulsion mit einem filmbildenden Polymer;

(b) ein flüssiges Treibmittel; und

(c) einen festen, wasserunlöslichen lipophilen grenzflächenaktiven Stoff mit einem HLB-Wert von 3-8; wobei der wasserunlösliche lipophile grenzflächenaktive Stoff in einer Menge von 1-10 Gew.-% bezogen auf das Gesamtgewicht von (a) und (c) vorhanden ist und die Zusammensetzung nach der geschäumten Abgabe aus dem Spender 18-24 Stunden nach der Abgabe eine Volumenausdehnung von 0,6% oder mehr zeigt.

**9.** Zusammensetzung nach Anspruch 8, bei der die Zusammensetzung nach der Abgabe eine Ausdehnung von 1,0 oder mehr zeigt.

**10.** Zusammensetzung nach einem der vorhergehenden Ansprüche, bei der das filmbildende Polymer Styrol/Acryl-Copolymer und Polyvinylacetat/Ethylen-Copolymer in einem Gewichtsverhältnis von 0,5:1 bis 0,6:1 Styrol/Acryl-Copolymer:Polyvinylacetat/Ethylen-Copolymer umfasst.

**11.** Zusammensetzung nach einem der vorhergehenden Ansprüche, bei der das Treibmittel in einer Menge von 2-10 Gew.-% bezogen auf das Gesamtgewicht von (a), (b) und (c) vorhanden ist.

**12.** Zusammensetzung nach Anspruch 11, bei der das Treibmittel in einer Menge von 4-6 Gew.-% vorhanden ist.

14

13. Zusammensetzung nach einem der vorhergehenden Ansprüche, bei der der grenzflächenaktive Stoff eine aus Fettalkoholethern, Fettsäureestern und Fettsäureamiden ausgewählte Komponente umfasst.

14. Zusammensetzung nach Anspruch 13, bei der der grenzflächenaktive Stoff einen HLB-Wert von 3,5 bis 6 hat.

15. Zusammensetzung nach Anspruch 14, bei der der Fettalkoholether einen alkoxylierten Fettalkohol umfassL.

16. Zusammensetzung nach Anspruch 15, bei der der alkoxylierte Fettalkohol ethoxylierten (2) Cetylalkohol oder ethoxylierten (2) Stearylether umfasst.

17. Zusammensetzung nach Anspruch 14, bei der das Fettsäureamid ein Amid von Stearinsäure umfasst.

18. Zusammensetzung nach Anspruch 14, bei der der Fettsäureester einen Ethylenglycolester von Stearinsäure umfasst.

19. Zusammensetzung nach einem der vorhergehenden Ansprüche, die ferner Isopropanol (d) in einer Menge von 1-10 Gew.-% bezogen auf das Gewicht von (a), (c) und (d) zusammen umfasst.

20. zusammensetzung nach Anspruch 19, bei der die wässrige Emulsion mit dem filmbildenden Polymer in einer Menge von etwa 50-98% bezogen auf das Gesamtgewicht von (a), (b), (c) und (d) vorhanden ist.

21. Schäumbare Zusammensetzung, die Folgendes umfasst:

    (a) eine wässrige Emulsion mit einem filmbildenden Polymer;

    (b) ein flüssiges Treibmittel; und

    (c) einen grenzflächenaktiven Stoff, der ausgewählt ist aus

        (i) ethoxylierten Fettalkoholethern,
        (ii) Fettsäureestern und Mischungen derselben, wobei (i) und (ii) feste, wasserunlösliche lipophile grenzflächenaktive Stoffe mit einem HLB-Wert zwischen 3 und 8 sind;

    wobei der grenzflächenaktive Stoff (c) in einer Menge von 1-10 Gew.-% bezogen auf das Gesamtgewicht von (a) und (c) vorhanden ist.

22. Zusammensetzung nach Anspruch 21, bei der der grenzflächenaktive Stoff eine Mischung von (i) und (ii) umfasst, wobei (i) ein ethoxylierter Fettalkohol ist und (ii) ein Ethylenglycolester der Fettsäure ist.

23. Zusammensetzung nach Anspruch 22, bei der der ethoxylierte Fettalkohol eine Mischung von ethoxyliertem Cetylalkohol und ethoxyliertem Stearylalkohol umfasst und bei der der Ethylenglycolester der Fettsäure Ethylenglycoldistearat umfasst; wobei der grenzflächenaktive Stoff in der Zusammensetzung in einer Menge von 1-10 Gew.-% bezogen auf das Gewicht der Emulsion und des grenzflächenaktiven Stoffs vorhanden ist.

24. Zusammensetzung nach Anspruch 23, bei der der ethoxylierte Cetylalkohol in einer Menge von etwa 1,0% vorhanden ist, der ethoxylierte Stearylalkohol in einer Menge von etwa 0,7% vorhanden ist und das Ethylenglycoldistearat in einer Menge von etwa 0,7% vorhanden ist.

25. Unter Druck stehender Aerosolbehälter mit einem zugehörigen Ventil zur Abgabe seines Inhalts in Form eines stabilen Schaums, wobei der Behälter eine schäumbare Zusammensetzung nach einem der vorhergehenden Ansprüche enthält.

26. Spender, in dem unter Druck eine schäumbare Dichtungs- oder Isolierzusammensetzung nach einem der Ansprüche 1 bis 24 aufbewahrt ist, wobei der Spender dazu geeignet ist, einen geschäumten Tupfen oder Strang der Zusammensetzung abzugeben.

27. Verfahren zum Füllen von Fugen, Rissen oder Hohlräumen, die zwischen benachbarten Baueinheiten bestehen, wobei in die Fuge, den Riss oder den Hohlraum eine ausreichende Füllmenge einer schäumbaren Zusammensetzung nach einem der Ansprüche 1 bis 24 gegeben wird.

28. Verfahren zum Bilden eines künstlichen Geländes, das sich als strukturelle Stütze oder als Hintergrund für einen Basteloder Handwerksgegenstand eignet, wobei eine Masse der schäumbaren Zusammensetzung nach einem der Ansprüche 1 bis 24 bereitgestellt wird.

29. Verfahren zum Bereitstellen einer Isolierschicht zwischen Baueinheiten, wobei eine Schicht einer schäumbaren Zusammensetzung nach einem der Ansprüche 1 bis 24 angrenzend an eine der Baueinheiten aufgebracht wird.

**Revendications**

1. Composition susceptible de mousser comprenant :

    (a) une émulsion aqueuse comprenant un polymère filmogène ;
    (b) un agent propulseur liquide ; et
    (c) un tensioactif solide lipophile non ionique ayant une valeur HLB de 3 à 8, ladite composition présentant une dilatation en volume 18 à 24 heures après sa distribution de 0,45 ou plus.

2. Composition selon la revendication 1, dans laquelle ledit polymère filmogène comprend une émulsion comprenant un copolymère de poly(acétate de vinyle) et d'éthylène et un copolymère styrène-acrylique.

3. Composition selon la revendication 1 ou la revendication 2, dans laquelle ledit agent propulseur comprend un composant gazeux liquéfié comprenant un alcane inférieur en $C_{1-6}$ ou un alcène inférieur en $C_{1-6}$.

4. Composition selon la revendication 3, dans laquelle ledit alcane inférieur en $C_{1-6}$ est présent et comprend le propane, l'isobutane et le n-butane.

5. Composition selon la revendication 3 ou la revendication 4, dans laquelle ledit agent propulseur comprend en outre du DME, et dans laquelle ledit alcane inférieur en $C_{1-6}$ est présent, ledit DME étant présent selon un rapport en volume de DME à alcane inférieur en $C_{1-6}$ de 1 : 1 à 1 :5.

6. Composition selon la revendication 5, dans laquelle ledit DME est présent selon un rapport en volume de DME à alcane inférieur en $C_{1-6}$ d'environ 1 :2.

7. Composition selon l'une quelconque des revendications précédentes, qui est une composition de calfeutrage ou d'isolation.

8. Composition de calfeutrage ou d'isolation susceptible de mousser à stocker sous pression à l'intérieur d'un distributeur adapté pour la libération de brin ou de bille moussé de ladite composition de calfeutrage ou d'isolation, ladite composition comprenant :

    (a) une émulsion aqueuse comprenant un polymère filmogène ;
    (b) un agent propulseur liquide ; et
    (c) un tensioactif solide lipophile insoluble dans l'eau ayant une valeur HLB de 3 à 8,

    dans laquelle ledit tensioactif lipophile insoluble dans l'eau est présent en une quantité de 1 à 10% en poids par rapport au poids total de (a) et de (c), ladite composition, une fois libérée sous forme de mousse à partir dudit distributeur, présentant une dilatation en volume 18 à 24 heures après ladite libération, de 0,6 ou plus.

9. Composition selon la revendication 8, dans laquelle après ladite libération, ladite composition présente une dilatation de 1,0 ou plus.

10. Composition selon l'une quelconque des revendications précédentes, dans laquelle ledit polymère filmogène comprend un copolymère styrène/acrylique et un copolymère de polyacétate de vinyle et d'éthylène selon un rapport en poids de 0,5 :1 à 0,6 :1 de copolymère styrène/acrylique : copolymère de polyacétate de vinyle et d'éthylène.

11. Composition selon l'une quelconque des revendications précédentes, dans laquelle ledit agent propulseur est présent en une quantité de 2 à 10% en poids par rapport au poids total de (a), de (b) et de (c).

12. Composition selon la revendication 11, dans laquelle ledit agent propulseur est présent en une quantité de 4 à 6% en poids.

13. Composition selon l'une quelconque des revendications précédentes, dans laquelle ledit tensioactif comprend un composant choisi parmi des éthers d'alcool gras, des esters d'acides gras et des amides d'acide gras.

14. Composition selon la revendication 13, dans laquelle ledit tensioactif a un HLB de 3,5 à 6.

15. Composition selon la revendication 14, dans laquelle ledit éther d'alcool gras comprend un alcool gras alcoxylé.

16. Composition selon la revendication 15, dans laquelle ledit alcool gras alcoxylé comprend un alcool cétylique (2) éthoxylé ou un éther stéarylique (2) éthoxylé.

17. Composition selon la revendication 14, dans laquelle ledit amide d'acide gras comprend un amide d'acide stéarique.

18. Composition selon la revendication 14, dans laquelle ledit ester d'acide gras comprend un ester d'éthylène glycol d'acide stéarique.

19. Composition selon l'une quelconque des revendications précédentes, comprenant de plus de l'isopropanol (d) en une quantité de 1 à 10% en poids par rapport au poids combiné de (a), (c) et (d).

20. Composition selon la revendication 19, dans laquelle ladite émulsion aqueuse comprenant ledit polymère filmogène est présent en une quantité d'environ 50 à 98% par rapport au poids total de (a), (b), (c) et (d).

21. Composition susceptible de mousser comprenant:

    (a) une émulsion aqueuse comprenant un polymère filmogène ;
    (b) un agent propulseur liquide ; et
    (c) un tensioactif choisi parmi

        (i) des éthers d'alcool gras éthoxylé,
        (ii) des esters d'acide gras, et leurs mélanges, ledit (i) et ledit (ii) étant des tensioactifs solides lipophiles insolubles dans l'eau ayant une valeur HLB de 3 à 8 ;

    dans laquelle ledit tensioactif (c) est présent en une quantité de 1 à 10% en poids par rapport au poids total de (a) et de (c).

22. Composition selon la revendication 21, dans laquelle ledit tensioactif comprend un mélange de (i) et (ii), dans laquelle (i) est un alcool gras éthoxylé, et (ii) est un ester d'éthylène glycol dudit acide gras.

23. Composition selon la revendication 22, dans laquelle ledit alcool gras éthoxylé comprend un mélange d'alcool cétylique éthoxylé et d'alcool stéarylique éthoxylé et dans laquelle ledit ester d'éthylène glycol dudit acide gras comprend du distéarate d'éthylène glycol ; ledit tensioactif étant présent dans ladite composition en une quantité de 1 à 10% en poids par rapport au poids de ladite émulsion et dudit tensioactif.

24. Composition selon la revendication 23, dans laquelle ledit alcool cétylique éthoxylé est présent en une quantité d'environ 1,0%, ledit alcool stéarylique éthoxylé est présent en une quantité d'environ 0,7%, et ledit distéarate d'éthylène glycol est présent en une quantité d'environ 0,7%.

25. Récipient aérosol pressurisé équipé d'une soupape associée pour la distribution de son contenu sous la forme d'une mousse stable et contenant une composition susceptible de mousser selon l'une quelconque des revendications précédentes.

26. Récipient distributeur dans lequel est stockée sous pression une composition de calfeutrage ou d'isolation susceptible de mousser selon l'une quelconque des revendications 1 à 24, ledit récipient distributeur étant adapté pour libérer une bille ou un brin moussé de ladite composition.

27. Procédé pour combler des joints, des fissures ou des espaces existant entre des unités structurales adjacentes comprenant l'application auxdits joint, fissure ou espace d'une quantité de remplissage suffisante d'une composition susceptible de mousser selon l'une quelconque des revendications 1 à 24.

28. Procédé pour la formation d'un terrain artificiel utile en tant que support structural ou fond pour un article de jeu ou d'artisanat, comprenant la fourniture d'une masse de composition susceptible de mousser selon l'une quelconque des revendications 1 à 24.

29. Procédé pour la fourniture d'une couche isolante entre des unités structurales comprenant l'application d'une couche d'une composition susceptible de mousser selon l'une quelconque des revendications 1 à 24, adjacente à l'une desdites unités structurales.

FIG-1

FIG · 2

FIG - 3

FIG - 4

FIG-5

502